(19) Europäisches Patentamt
European Patent Office
Office européen des brevets

(11) **EP 2 298 694 A1**

(12) **EUROPEAN PATENT APPLICATION**
published in accordance with Art. 153(4) EPC

(43) Date of publication:
**23.03.2011 Bulletin 2011/12**

(21) Application number: **09758364.5**

(22) Date of filing: **03.06.2009**

(51) Int Cl.:
*C01B 13/14* (2006.01)   *C01B 33/18* (2006.01)
*C01G 9/08* (2006.01)   *C01G 19/00* (2006.01)
*C01G 23/047* (2006.01)   *C09D 7/12* (2006.01)
*C09D 201/00* (2006.01)

(86) International application number:
**PCT/JP2009/060193**

(87) International publication number:
**WO 2009/148097 (10.12.2009 Gazette 2009/50)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **03.06.2008 JP 2008145490**

(71) Applicant: **Asahi Glass Company, Limited**
**Chiyoda-ku**
**Tokyo 100-8405 (JP)**

(72) Inventors:
• **KAWAI, Yohei**
**Tokyo 100-8405 (JP)**
• **YONEDA, Takashige**
**Tokyo 100-8405 (JP)**

(74) Representative: **Müller-Boré & Partner**
**Patentanwälte**
**Grafinger Straße 2**
**81671 München (DE)**

(54) **METHOD FOR PRODUCING CORE-SHELL PARTICLE, CORE-SHELL PARTICLE, METHOD FOR PRODUCING HOLLOW PARTICLE, PAINT COMPOSITION AND ARTICLE**

(57) To provide a method whereby core-shell particles and hollow particles can be produced while suppressing formation of a gel or particles made of a shell-forming material; core-shell particles and a coating composition wherein a shell thickness is strictly controlled; and an article having a coating film having a high antireflection effect.

Core-shell particles obtained by irradiating a liquid containing core particles made of a material having a dielectric constant of at least 10 and a metal oxide precursor with a microwave to form a shell made of a metal oxide on the surface of the core particles are used.

EP 2 298 694 A1

**Description**

TECHNICAL FIELD

The present invention relates to a method for producing core-shell particles, core-shell particles prepared by the production method, a method for producing hollow particles using the core-shell particles, a coating composition comprising hollow particles prepared by the production method and an article comprising a coating film made of the coating composition.

BACKGROUND ART

Metal oxide particles such as titanium oxide and zinc oxide particles have ultraviolet shielding properties, and they are used as resin fillers, cosmetics, etc. Further, metal oxide particles such as particles of tin oxide doped with indium (hereinafter referred to as ITO) have infrared shielding properties, and they are used as fillers for resin, coatings for glass, etc.
However, such metal oxide particles have the following problems.

(i) Titanium oxide, zinc oxide, etc. have a photocatalytic activity, and in a case where such metal oxide particles are used for fillers for resin, cosmetics, etc., they are likely to decompose organic matters (other components composing resin or cosmetics).
(ii) In a case where zinc oxide particles are used for fillers for fluororesin, zinc oxide reacts with fluorine compounds released from a fluororesin, causing zinc fluoride to be deteriorated. Therefore the ultraviolet shielding properties are weakened.
(iii) In a case where ITO particles are used for fillers for resin, coatings for glass, etc., ITO deteriorates due to oxidation. Therefore the infrared shielding properties are weakened.

Accordingly, in a case where metal oxide particles are used for the above-described applications, usually, metal oxide particles are used as core particles and the surface of the particles is coated by a shell made of a metal oxide such as silicon oxide (silica), and then used as core-shell particles.
Further, it has been known that the core particles of the core-shell particles are dissolved to prepare hollow particles composed of a shell made of a metal oxide such as silicon oxide (silica). The hollow particles have a low refractive index, and therefore are used as a material for e.g. antireflection coatings.
As a method for producing the core-shell particles and hollow particles, a method comprising the following steps is known (Patent Document 1).
Patent Document 1 discloses "a step of reacting a silicon oxide precursor at a pH higher than 8 in a dispersion of zinc oxide particles constituting core particles to form a shell made of silicon oxide on the surface of zinc oxide particles, thereby to obtain a dispersion containing core-shell particles". Further, Patent Document 1 discloses "a step of mixing a dispersion containing core-shell particles with an acidic cation exchange resin to bring them into contact with each other and dissolving the zinc oxide particles at a pH within a range of from 2 to 8 to obtain a dispersion of hollow particles composed of the shell".
However, the above methods require a long period of time for production of the core-shell particles, since formation of the shell is conducted at room temperature. Further, if heating is conducted to increase the reaction rate of the silicon oxide precursor, the reaction of the silicon oxide precursor proceeds also at other than the surface of the core particles to form particles composed solely of the silicon oxide precursor. Here, formation of particles composed solely of the silicon oxide precursor at other than the surface of the core particles is referred to as deposition. Further, if such deposition proceeds, the dispersion will be gelled or the solid content will precipitate without being dispersed in a dispersion medium.

PRIOR ART DOCUMENT

PATENT DOCUMENT

Patent Document 1: JP-A-2006-335605

DISCLOSURE OF THE INVENTION

OBJECT TO BE ACCOMPLISHED BY THE INVENTION

The present invention is to provide a method whereby core-shell particles and hollow particles can be produced while suppressing formation of a gel or particles made of a shell-forming material; core-shell particles and a coating composition wherein a shell thickness is strictly controlled; and an article having a coating film having a high antireflection effect.

MEANS TO ACCOMPLISH THE OBJECT

The method for producing the core-shell particles of the present invention is characterized in that it comprises irradiating a liquid containing core particles made of a material having a dielectric constant of at least 10 and a metal oxide precursor with a microwave to form a shell made of a metal oxide on the surface of the core particles.

The core particles are preferably zinc oxide particles, titanium oxide particles, ITO particles or manganese-doped zinc sulfide.

The metal oxide precursor is preferably an alkoxysilane.

The core-shell particles of the present invention are ones which are prepared by the method for producing core-shell particles of the present invention.

The method for producing hollow particles of the present invention is characterized in that it comprises dissolving or decomposing the core particles of the core-shell particles prepared by the method for producing core-shell particles of the present invention.

The core particles are preferably zinc oxide particles.

The metal oxide precursor is preferably an alkoxysilane.

The coating composition of the present invention is characterized in that it comprises the hollow particles prepared by the method for producing hollow particles of the present invention and a dispersion medium.

The article of the present invention is an article comprising a substrate and a coating film made of the coating composition of the present invention.

EFFECTS OF THE INVENTION

By the method for producing core-shell particles of the present invention, it is possible to produce core-shell particles while suppressing formation a gel or particles made of a shell-forming material.

The core-shell particles of the present invention have a low content of particles made of a shell-forming material and a gel, whereby the shell thickness can be strictly controlled.

By the method for producing hollow particles of the present invention, it is possible to produce hollow particles while suppressing formation of a gel or particles made of a shell-forming material.

The coating composition of the present invention have a low content of particles made of a shell-forming material and a gel.

The article of the present invention has a coating film having a high antireflection effect.

BEST MODE FOR CARRYING OUT THE INVENTION

<METHOD FOR PRODUCING CORE-SHELL PARTICLES>

The method for producing core-shell particles of the present invention comprises irradiating a liquid containing core particles made of a material having a dielectric constant of at least 10 and a metal oxide precursor with a microwave to form a shell made of a metal oxide on the surface of the core particles.

Specifically, a method comprising the following steps may be mentioned.

(a) A step of adding a metal oxide precursor, water as required, an organic solvent, an alkali or acid, other additive compounds, etc. to a dispersion of core particles wherein core particles are dispersed in a dispersion medium to prepare a raw material liquid.

(b) A step of heating the raw material liquid by irradiating the raw material liquid with a microwave, and hydrolyzing the metal oxide precursor by using the alkali or acid to deposit a metal oxide on the surface of the core particles, to form a shell, thereby to obtain a dispersion of the core-shell particles.

(c) A step of removing the dispersion medium from the dispersion of core-shell particles to recover the core-shell particles, as the case requires.

STEP (a):

The dielectric constant of the material for core particles is at least 10, preferably from 10 to 200, more preferably from 15 to 100. When the dielectric constant of the material for core particles is at least 10, adsorption of the microwave tends to be easy, whereby it becomes possible to heat core particles selectively and to a high temperature by the microwave.

The electric power which is converted into heat inside of the dielectric material at the time of irradiation with the microwave is obtained by the following formula.

$$P=2\pi fE^2 \varepsilon' \tan\delta$$

(P: electric power, f: frequency, E: magnitude of electric field, $\varepsilon$: dielectric constant, $\tan\delta$: dielectric loss tangent)

Accordingly, the amount of generated heat is determined by multiplication of the dielectric constant and the dielectric loss tangent, and therefore a material having a large dielectric loss tangent and dielectric constant tends to be easily heated. The dielectric loss tangent is preferably from 0.001 to 1, more preferably from 0.01 to 1.

The dielectric constant and the dielectric loss tangent can be calculated based on values of reflection coefficient and phase which are measured after impressing an electric field to a test sample by a bridge circuit, by using a network analyzer.

The material for the core particles may be a material having a dielectric constant of at least 10.

The material having a dielectric constant of at least 10 may, for example, be zinc oxide, titanium oxide, ITO, aluminum oxide, zirconium oxide, zinc sulfide, gallium arsenide, indium phosphide, copper aluminum disulfide, copper gallium disulfide, copper indium disulfide, copper indium diselenide, silver indium diselenide, yttria, yttrium vanadate, iron oxide, cadmium oxide, copper oxide, bismuth oxide, tungsten oxide, cerium oxide, tin oxide, gold, silver, copper, platinum, palladium, ruthenium, ferroplatinum or carbon.

The core particles are preferably zinc oxide particles or titanium oxide particles in view of their excellent ultraviolet shielding properties, preferably ITO particles in view of their excellent infrared shielding properties, and preferably manganese-doped zinc sulfide particles in view of their excellent photoluminescence properties.

The shape of the core particles is not particularly limited, and a sphere-shape, an angular shape, a needle-shape, a sheet-shape, a chain-shape, a fiber-shape or a hollow-shape may be used.

The average agglomerated particle size (diameter) of the core particles in the dispersion is preferably from 1 to 1,000 nm, more preferably from 1 to 300 nm. When the average agglomerated particle size of the core particles is at least 1 nm, the surface area per mass of the core particles does not increase too much, whereby the amount of a metal oxide required for coating will be suppressed. When the average agglomerated particle size of the core particles is at most 1,000 nm, dispersibility in the dispersion medium becomes good.

The agglomerated particle size of the core particles in a dispersion is measured by a dynamic light scattering method.

The concentration of the core particles is preferably from 0.1 to 40 mass%, more preferably from 0.5 to 20 mass%, in the dispersion (100 mass%) of the core particles. When the concentration of the core particles is at least 0.5 mass%, production efficiency of the core-shell particles becomes good. When the concentration of the core particles is at most 20 mass%, agglomeration of the core particles tends to hardly occur.

The dispersion medium may, for example, be water, an alcohol (such as methanol, ethanol or isopropanol), a ketone (such as acetone or methyl ethyl ketone), an ether (such as tetrahydrofuran or 1,4-dioxane), an ester (such as ethyl acetate or methyl acetate), a glycol ether (such as ethylene glycol monoalkyl ether), a nitrogen-containing compound (such as N,N-dimethylacetamide or N,N-dimethylformamide) or a sulfur-containing compound (such as dimethylsulfoxide).

The dispersion medium preferably contains water in an amount of from 5 to 100 mass% based on 100 mass% of the dispersion medium, since water is necessary for hydrolysis of the metal oxide precursor.

The metal oxide may be an oxide of at least one metal selected from the group consisting of Si, Al, Cu, Ce, Sn, Ti, Cr, Co, Fe, Mn, Ni, Zn and Zr. The metal oxide is $SiO_2$ when the metal is Si, $Al_2O_3$ when the metal is Al, CuO when the metal is Cu, $CeO_2$ when the metal is Ce, $SnO_2$ when the metal is Sn, $TiO_2$ when the metal is Ti, $Cr_2O_3$ when the metal is Cr, CoO when the metal is Co, $Fe_2O_3$ when the metal is Fe, $MnO_2$ when the metal is Mn, NiO when the metal is Ni, ZnO when the metal is Zn, or $ZrO_2$ when the metal is Zr.

The metal oxide precursor may, for example, be a metal alkoxide, and is preferably an alkoxysilane in view of formation of a compact shell.

The alkoxysilane may, for example, be tetramethoxysilane, tetraethoxysilane (hereinafter referred to as TEOS), tetra n-propoxysilane or tetraisopropoxysilane, and is preferably TEOS in view of its appropriate reaction rate.

The amount of the metal oxide precursor is preferably an amount by which the shell thickness becomes from 1 to 500 nm, more preferably an amount by which the shell thickness becomes from 1 to 100 nm.

The amount of the metal oxide precursor (as calculated as metal oxide) is, specifically, preferably from 0.1 to 10,000 parts by mass based on 100 parts by mass of the core particles.

The alkali may, for example, be potassium hydroxide, sodium hydroxide, ammonia, ammonium carbonate, ammonium hydrogencarbonate, dimethylamine, triethylamine or aniline, and is preferably ammonia in view of its removability by heating.

The amount of the alkali is preferably an amount by which the pH of the raw material liquid becomes from 8.5 to 10.5, more preferably an amount by which the pH of the raw material liquid becomes from 9.0 to 10.0 in view of easiness in formation of a compact shell by three-dimensional polymerization of the metal oxide precursor.

The acid may, for example, be hydrochloric acid or nitric acid. Further, since the zinc oxide particles are dissolved in the acid, it is preferred to conduct hydrolysis of the metal oxide precursor by an alkali when the zinc oxide particles are used as the core particles.

The amount of the acid is preferably an amount by which the pH of the raw material liquid becomes from 3.5 to 5.5.

The other additive compound may, for example, be a metal chelate compound, an organic tin compound, a metal alkolate or a metal fatty acid salt, and in view of the strength of the shell, it is preferably a metal chelate compound or an organic tin compound, particularly preferably a metal chelate compound.

The amount of the other additive compound (as calculated as metal oxide) is preferably from 0.1 to 20 parts by mass, more preferably from 0.2 to 8 parts by mass based on 100 parts by mass of the amount of the metal oxide precursor (as calculated as metal oxide).

STEP (b):

The microwave is, usually, an electromagnetic wave having a frequency of from 300 MHz to 300 GHz. Usually, a microwave having a frequency of 2.45 GHz is used, but the microwave is by no means restricted thereto and a frequency by which an unheated material is efficiently heated may be selected. According to the radiowave regulation law, a frequency band to be used for radiowave applications other than communication, so-called ISM band, is defined, and a microwave of e.g. 433.92 ($\pm$0.87) MHz, 896 ($\pm$10) MHz, 915 ($\pm$13) MHz, 2,375 ($\pm$50) MHz, 2,450 ($\pm$50) MHz, 5,800 ($\pm$75) MHz or 24,125 ($\pm$125) MHz may be used.

The output power of the microwave is preferably an output power by which the raw material liquid is heated to from 30 to 500°C, more preferably an output power by which the raw material liquid is heated to from 50 to 300°C.

When the temperature of the raw material liquid is at least 30°C, it is possible to form a compact shell in a short period of time. When the temperature of the raw material liquid is at most 500°C, it is possible to suppress the amount of metal oxide deposited at other than the surface of core particles.

The microwave heat treatment may be a batch process, but, for mass production, a continuous process conducted by using a flow apparatus is more preferred. The irradiation system of the microwave may be a single mode, but a multimode which can conduct heating uniformly is more preferred for mass production.

The irradiation time of the microwave may be adjusted to a period of time by which a shell having a desired thickness is formed, depending upon the output power of the microwave (temperature of raw material liquid), and is e.g. from 10 seconds to 60 minutes.

STEP (c):

As the method of removing the dispersion medium from the dispersion of core-shell particles to recover the core-shell particles, the following methods may be mentioned.

(c-1) A method of heating the dispersion of core-shell particles to volatilize e.g. the dispersion medium.
(c-2) A method of subjecting the dispersion of core-shell particles to solid-liquid separation, followed by drying the solid content.
(c-3) A method of spraying the dispersion of core-shell particles into a heated gas by using a spray dryer to volatilize e.g. the dispersion medium (spray drying method).
(c-4) A method of cooling and depressurizing the dispersion of core-shell particles to sublime e.g. the dispersion medium (freeze-drying method).

In the above-mentioned method for producing core-shell particles of the present invention, a liquid containing core particles made of a material having a dielectric constant of at least 10 and a metal oxide precursor, is irradiated with a microwave, whereby it is possible to heat the core particles selectively and to a high temperature. Therefore, even if the temperature of the entire raw material liquid becomes a high temperature, the core particles are heated to a higher temperature, whereby hydrolysis of the metal oxide precursor preferentially proceeds on the surface of the core particles to selectively deposit a metal oxide on the surface of core particles. Accordingly, the amount of particles made of a shell-forming material (metal oxide) which are deposited independently at other than the surface of the core particles can be suppressed. Further, the shell can be formed under a high temperature condition, whereby the shell can be formed in a short period of time.

<CORE-SHELL PARTICLES>

The core-shell particles of the present invention are core-shell particles prepared by the method for producing core-shell particles of the present invention.

The shell thickness of the core-shell particles is preferably from 1 to 500 nm, more preferably from 1 to 100 nm. When the shell thickness is at least 1 nm, a photocatalytic activity of the core particles is sufficiently suppressed, and then degeneration or deterioration of the core particles is sufficiently suppressed. When the shell thickness is at most 500 nm, functions of the core particles such as ultraviolet shielding properties and infrared shielding properties are sufficiently obtainable.

It is possible to adjust the thickness of the shell by appropriately adjusting the amount of the metal oxide precursor, the output power of the microwave, the irradiation time, etc. For example, on the assumption that a shell having a desired thickness is formed around a core particle, from the volume ratio of the core particle to the shell, a mass ratio is calculated based on a specific gravity of the core particle to a shell-forming material (metal oxide), and then the charge amount of the metal oxide precursor to the core particles is adjusted to control the shell thickness.

The shell thickness is the average of shell thicknesses of 100 core-shell particles randomly selected by observation with a transmission electron microscope.

The average agglomerated particle size (diameter) of the core-shell particles is preferably from 3 to 1,000 nm, more preferably from 3 to 300 nm. The average agglomerated particle size of the core-shell particles is the average agglomerated particle size of the core-shell particles in a dispersion medium and is measured by a dynamic light scattering method.

The average primary particle size of the core-shell particles is preferably from 3 to 500 nm, more preferably from 3 to 200 nm.

The average primary particle size (diameter) of the core-shell particles is the average of particle sizes of 100 core-shell particles randomly selected by observation with a transmission electron microscope.

The above-mentioned core-shell particles of the present invention are prepared by the method for producing core-shell particles of the present invention, whereby the amount of particles made of the shell-forming material (metal oxide) is low, and therefore it is possible to control the shell thickness precisely.

<METHOD FOR PRODUCING HOLLOW PARTICLES>

The method for producing hollow particles of the present invention is a method of dissolving or decomposing the core particles of the core-shell particles prepared by the method for producing core-shell particles of the present invention.

Specifically, a method comprising the following steps may be mentioned.

(a') A step of adding a metal oxide precursor, and, as the case requires, water, an organic solvent, an alkali or acid, and other additive compounds, etc. to a dispersion of core particles wherein core particles are dispersed in a dispersion medium to prepare a raw material liquid.
(b') A step of heating the raw material liquid by irradiating the raw material liquid with a microwave, and hydrolyzing the metal oxide precursor by using the alkali or acid, to deposit a metal oxide on the surface of the core particles, to form a shell, thereby to prepare a dispersion of the core-shell particles.
(c') A step of dissolving or decomposing core particles of the core-shell particles contained in the dispersion to obtain a dispersion of hollow particles made of the shell.

STEP (a'):

Step (a') is the same step as step (a) of the method for producing core-shell particles of the present invention.
The material of the core-shell particles may be one having a dielectric constant of at least 10 and being capable of being dissolved or decomposed in the step (c').
The core particles may, for example, be heat decomposable organic particles (such as surfactant micells, a water soluble organic polymer, a styrene resin or an acrylic resin), acid-soluble inorganic particles (such as zinc oxide, sodium aluminate, calcium carbonate or basic zinc carbonate), or photo-soluble inorganic particles (such as zinc sulfide, cadmium sulfide or zinc oxide). Particularly, zinc oxide particles are preferred.

STEP (b'):

Step (b') is the same step as the step (b) in the method for producing core-shell particles of the present invention.

STEP (c'):

In a case where the core particles are acid-soluble inorganic particles, the core particles can be dissolved and removed by adding an acid.

The acid may, for example, be an inorganic acid (such as hydrochloric acid, sulfuric acid or nitric acid), an organic acid (such as formic acid or acetic acid) or an acidic cation exchange resin.

In the above-mentioned method for producing hollow particles of the present invention, the core-shell particles prepared by the method for producing core-shell particles of the present invention are used, whereby it is possible to suppress the amount of particles made of the shell-forming material (metal oxide), contained in the obtainable dispersion. Further, it is possible to form the shell under a high temperature condition, whereby the shell is formed in a short period of time.

<HOLLOW PARTICLES>

The shell thickness of the hollow particles is preferably from 1 to 50 nm, more preferably from 1 to 20 nm. When the shell thickness is at least 1 nm, the strength of the hollow particles is sufficient. When the shell thickness is at most 50 nm, it is possible to form a coating film having a high antireflection effect.

It is possible to adjust the shell thickness by appropriately adjusting the amount of the metal oxide precursor, the output power of the microwave, the irradiation time, etc.

The shell thickness is the average of shell thicknesses of 100 hollow particles randomly selected by observation with a transmission electron microscope.

The average agglomerated particle size (diameter) of the hollow particles is preferably from 5 to 300 nm, more preferably from 10 to 100 nm. When the average agglomerated particle size of the hollow particles is at least 5 nm, a sufficient air gap is formed between adjacent hollow particles, whereby the refractive index of the coating film becomes low, thus leading to a high antireflection effect. When the average agglomerated particle size of the hollow particles is at most 300 nm, scattering of light will be suppressed, whereby a coating film with high transparency will be obtained.

The average agglomerated particle size of the hollow particles is the average agglomerated particle size of the hollow particles in a dispersion medium and is measured by a dynamic light scattering method.

The average primary particle size (diameter) of the hollow particles is preferably from 5 to 100 nm, more preferably from 5 to 80 nm. When the average primary particle size of the hollow particles is within these ranges, the antireflection effect of the coating film becomes high.

The average primary particle size of the hollow particles is the average of particle sizes of 100 hollow particles randomly selected by observation with a transmission electron microscope.

<COATING COMPOSITION>

The coating composition of the present invention comprises hollow particles prepared by the method for producing hollow particles of the present invention, a dispersion medium, and as the case requires, a binder.

The dispersion medium may, for example, be water, an alcohol (such as methanol, ethanol or isopropanol), a ketone (such as acetone or methyl ethyl ketone), an ether (such as tetrahydrofuran or 1,4-dioxane), an ester (such as ethyl acetate or methyl acetate), a glycol ether (such as ethylene glycol monoalkyl ether), a nitrogen-containing compound (such as N,N-dimethylacetamide or N,N-dimethylformamide) or a sulfur-containing compound (such as dimethylsulfoxide).

The binder may, for example, be an alkoxysilane (such as tetramethoxysilane or TEOS), a silicic acid oligomer obtained by hydrolyzing an alkoxysilane, a silicon compound having a silanol group (such as silicic acid or trimethyl silanol), active silica (such as water glass or sodium orthosilicate) or an organic polymer (such as polyethylene glycol, a polyacrylamide derivative or polyvinyl alcohol).

The mass ratio of the hollow particles to the binder (hollow particles/binder) is preferably from 10/0 to 5/5, more preferably from 9/1 to 7/3. When the hollow particles/binder (mass ratio) is within the above range, it is possible to maintain the refractive index of the coating film to be low and form a coating film having a high antireflection effect.

The solid content concentration of the coating composition of the present invention is preferably from 0.1 to 20 mass%.

The coating composition of the present invention may contain hollow particles other than the hollow particles of the present invention or solid fine particles within a range not to impair the effects of the present invention.

The coating composition of the present invention may contain known additives such as an alkaline earth metal salt such as a chloride, nitrate, sulfate, formate or acetate of e.g. Mg, Ca, Sr or Ba; a curing catalyst such as an inorganic acid, an organic acid, a base, a metal chelate compound, a quaternary ammonium salt or an organic tin compound; inorganic particles showing ultraviolet shielding properties, infrared shielding properties or electroconductive properties; a pigment, a dye and a surfactant.

In the coating composition of the present invention, various compounding agents for coating material comprising an inorganic compound and/or an organic compound may be blended to impart one or more functions selected from hard coating, alkali barrier, coloring, electrical conductivity, antistatic properties, polarization, ultraviolet shielding properties, infrared shielding properties, antifouling properties, anti-fogging properties, photocatalytic activity, antibacterial properties, photoluminescence properties, battery properties, control of refractive index, water repellency, oil repellency, removal of fingerprint, lubricity, and the like.

To the coating composition of the present invention, depending upon the function required for the coating film, commonly used additives such as an antifoaming agent, a leveling agent, an ultraviolet absorber, a viscosity modifier, an antioxidant and a fungicide may properly be added. Further, to make the coating film have a desired color, various pigments which are commonly used for coating material such as titania, zirconia, white lead and red oxide may be blended.

The above-mentioned coating composition of the present invention contains hollow particles prepared by the method for producing hollow particles of the present invention, whereby the amount of solid fine particles made of a shell-forming material (metal oxide) is low. Therefore, it is possible to form a coating film having a low refractive index and a high antireflection effect.

<ARTICLE>

The article of the present invention is an article having a coating film made of the coating composition of the present invention formed on a substrate.

The thickness of the coating film is preferably from 50 to 300 nm, more preferably from 80 to 200 nm. When the thickness of the coating film is at least 50 nm, interference of light will occur, whereby an antireflection effect will be developed. When the thickness of the coating film is at most 300 nm, a film can be formed without cracking.

The thickness of the coating film is obtained by measuring the interface between the coated surface and the non-coated surface by a profilometer.

The refractive index of the coating film is preferably from 1.2 to 1.4, more preferably from 1.23 to 1.35. When the refractive index of the coating film is at least 1.2, the light reflected on the upper film surface and the light reflected on the lower film surface are offset by interference, whereby a coating film having a high antireflection effect is obtained. When the refractive index of the coating film is at most 1.4, the light reflected on the upper film surface and the light reflected on the lower film surface are offset by interference, whereby a coating film having a high antireflection effect will be obtained when glass is used as the substrate. The refractive index of the coating film is preferably from 0.0 to 1.4%, more preferably from 0.0 to 1.0%.

The refractive index of the coating film is a refractive index at 550 nm and is measured by a refractometer.

The coating film is formed by applying the coating composition of the present invention to the surface of a substrate and drying it. The coating film is preferably further heated or baked from the viewpoint of the film strength, and is more preferably baked in a tempering step of glass from the view point of cost.

The material of the substrate may, for example, be glass, a metal, an organic polymer or silicon, and the substrate may be a substrate having any coating film preliminarily formed thereon. As the glass, not only glass formed by float process or the like but also patterned glass obtained by rollout process by supplying molten glass between a roll member having irregularities imprinted on the surface and another roll member may be used. Particularly, glass having a coating film formed by applying and drying the coating composition of the present invention can be preferably used as a cover glass of solar cells. In such a case, the coating film is preferably formed on the smooth surface (a surface with a low degree of irregularities) of the patterned glass. The organic polymer may, for example, be polyethylene terephthalate (hereinafter referred to as PET), polycarbonate, polymethyl methacrylate or triacetyl acetate.

The shape of the substrate may, for example, be a plate or a film.

On the article of the present invention, another functional layer (such as an adhesion-improving layer or a protective layer) may be formed in a range not to impair the effects of the present invention. Further, in the present invention, it is preferred that only the coating film of the present invention is formed, in view of productivity and durability.

On the substrate, a coating film comprising an inorganic compound and/or an organic compound may be preliminarily formed to impart one or more functions selected from hard coating, alkali barrier, coloring, electrical conductivity, antistatic properties, polarization, ultraviolet shielding properties, infrared shielding properties, antifouling properties, anti-fogging properties, photocatalytic activity, antibacterial properties, photoluminescence properties, battery properties, control of refractive index, water repellency, oil repellency, removal of fingerprint, lubricity, and the like. Further, on the coating film obtained by applying the coating composition of the present invention, a functional coating film comprising an inorganic compound and/or an organic compound may be formed to impart one or more functions selected from hard coating, alkali barrier, coloring, electrical conductivity, antistatic properties, polarization, ultraviolet shielding properties, infrared shielding properties, antifouling properties, anti-fogging properties, photocatalytic activity, antibacterial properties, photoluminescence properties, battery properties, control of refractive index, water repellency, oil repellency, removal of fingerprint, lubricity, and the like.

As the coating method, a known method such as bar coating, die coating, gravure coating, roll coating, flow coating, spray coating, online spray coating, ultrasonic spray coating, inkjet, or dip coating may be mentioned. The online spray coating is a method of spray coating on the same line for formation of the substrate, and is capable of producing articles at a low cost and is useful, since a step of reheating the substrate can be omitted.

The above-mentioned article of the present invention has a coating film made of the coating composition of the present invention, and therefore it has a high antireflection effect.

EXAMPLES

Now, the present invention will be described in further detail with reference to Examples and Comparative Examples, but it should be understood that the present invention is by no means restricted thereto.

Examples 1 to 8 are Examples of the present invention, and Examples 9 to 14 are Comparative Examples.

(AVERAGE AGGLOMERATED PARTICLE SIZE OF CORE PARTICLES)

The average agglomerated particles size of the core particles was measured by a dynamic light scattering particle size analyzer (Microtrac UPA, manufactured by NIKKISO, CO., LTD.).

(DIELECTRIC CONSTANT)

The dielectric constant of the material for core particles was calculated based on values of reflection coefficient and phase which were measured after impressing an electric field to a test sample by a bridge circuit, by using a network analyzer (PNA microwave vector network analyzer, manufactured by Agilent Technologies Inc.).

(STATE OF LIQUID)

The state of a raw material liquid after heating was confirmed by visual observation and a transmission electron microscope.

Dispersion: Core-shell particles are uniformly dispersed in a dispersion medium (confirmed by visual observation).

Deposition: Besides core-shell particles, silicon oxide particles are deposited in a large amount (confirmed by a transmission electron microscope).

Precipitation: A solid content is precipitated without being dispersed in a dispersion medium (confirmed by visual observation).

(SHELL THICKNESS)

A dispersion of core-shell particles was diluted to 0.1 mass% with ethanol, sampled on a collodion membrane and observed by a transmission electron microscope, whereby 100 particles were randomly selected and the shell thicknesses of the respective core-shell particles were measured, whereupon the shell thicknesses of 100 core-shell particles were averaged.

(MINIMUM REFLECTANCE)

The reflectance of a coating film on a substrate at from 380 to 1,200 nm was measured by an electrophotometer (model: U-4100, manufactured by Hitachi, Ltd.) to obtain the minimum value of the reflectance (minimum reflectance).

EXAMPLE 1

To a 200 mL pressure-resistant container made of quartz, 55.6 g of an aqueous dispersion (average agglomerated particle size: 30 nm, solid content concentration: 20 mass%) of zinc oxide (ZnO, dielectric constant: 18) particles, 6.9 g of TEOS (solid content concentration as calculated as silicon oxide: 28.8 mass%) (target shell thickness: 2 nm), 36.9 g of ethanol, and 0.6 g of 28 mass% aqueous ammonia were added to prepare a raw material liquid having pH of 10.

The pressure-resistant container was tightly sealed, and then the raw material liquid was irradiated with a microwave (MW) having a maximum output power of 500 W and frequency of 2.45 GHz for 5 minutes by using a microwave heating apparatus to hydrolyze TEOS and deposit silicon oxide on the surface of zinc oxide particles to form a shell, whereby 100 g of a dispersion of core-shell particles was obtained. The temperature of the reaction mixture during microwave irradiation was 120°C. The state of the dispersion of core-shell particles was observed. The results are shown in Table 1.

A portion of the dispersion of core-shell particles was sampled, and then the shell thickness was measured by a transmission electron microscope and was found to be 2 nm i. e. the same as the desired shell thickness. The results are shown in Table 1.

100 g of a strongly acidic cation exchange resin (total exchange capacity: at least 2.0 meq/mL) was added to 100 g of the dispersion of the core-shell particles, followed by stirring for 1 hour, and after the pH became 4, the strongly acidic cation exchange resin was removed by filtration to obtain a dispersion of hollow particles. The dispersion was concentrated by ultrafiltration to a solid content concentration of 20 mass%.

To a 200 mL glass container, 6 g of the dispersion (solid content concentration: 20 mass%) of the hollow particles, 6 g of a silicic acid oligomer solution (solid content concentration: 5 mass%) and 88 g of ethanol were added, followed by stirring for 10 minutes to obtain a coating composition (solid content concentration: 1.5 mass%).

The coating composition was applied to the surface of a glass substrate (100 mm x 100 mm, thickness 3.5 mm) wiped with ethanol and spin-coated at a rotational speed of 200 rpm for 60 seconds for uniformalization, and baked at 650°C for 10 minutes to form a coating film having a thickness of 100 nm. The minimum reflectance of the coating film was measured. The results are shown in Table 1.

EXAMPLE 2

100 g of the dispersion of core-shell particles was obtained in the same manner as in Example 1 except that the amount of the aqueous dispersion of zinc oxide particles was changed to 62.5 g, the amount of TEOS was changed to 3.5 g (target shell thickness: 1 nm), the amount of ethanol was changed to 33.7 g, the amount of aqueous ammonia was changed to 0.3 g, the maximum output power of microwave was changed to 1,000 W, and the irradiation time of microwave was changed to 2 minutes. The temperature of the reaction mixture during microwave irradiation was 180°C. The state of the dispersion of core-shell particles was observed. The results are shown in Table 1.

Further, by the same operation as in Example 1, the shell thickness was measured, and it was found to be 1 nm i.e. the same as the desired shell thickness. The results are shown in Table 1.

Further, by the same operation as in Example 1, a dispersion and coating composition of hollow particles were obtained, and then a coating film was formed. The minimum reflectance of the coating film was measured. The results are shown in Table 1.

EXAMPLE 3

100 g of a dispersion of core-shell particles was obtained in the same manner as in Example 1 except that the output power of microwave was changed to 100 W and the irradiation time of microwave was changed to 60 minutes. The temperature of the reaction mixture during microwave irradiation was 60°C. The state of the dispersion of core-shell particles was observed. The results are shown in Table 1.

A silicic acid oligomer solution (solid content concentration: 2 mass%) was applied to the surface of a glass substrate (100 mm x 100 mm, thickness 3.5 mm) wiped with ethanol and spin-coated at a rotational speed of 200 rpm for 60 seconds for uniformalization, and dried at 200°C for 10 minutes to form a coating film having a thickness of 100 nm.

Further, by the same operation as in Example 1, the shell thickness was measured, and it was found to be 2 nm i.e. the same as the desired shell thickness. The results are shown in Table 1.

Further, by the same operation as in Example 1, a dispersion and coating composition of hollow particles were obtained to form a coating film. The minimum reflectance of the coating film was measured. The results are shown in Table 1.

EXAMPLE 4

To a 200 mL pressure-resistant container made of quartz, 45.5 g of an aqueous dispersion of zinc oxide particles (average agglomerated particle size: 70 nm, solid content concentration: 20 mass%), 3.5 g of TEOS (solid content concentration as calculated as silicon oxide: 28.8 mass%) (target shell thickness: 2 nm), 50.7 g of ethanol and 0.3 g of 28 mass% aqueous ammonia were added to prepare a raw material liquid having pH of 10.

The pressure-resistant container was tightly sealed, and then the raw material liquid was irradiated with a microwave (MW) having a maximum output power of 1,400 W and frequency of 2.45 GHz for 15 minutes by using a microwave heating apparatus to hydrolyze TEOS and deposit silicon oxide on the surface of zinc oxide particles to form a shell, whereby 100 g of a dispersion of core-shell particles was obtained. The temperature of the reaction mixture during microwave irradiation was 280°C. The state of the dispersion of core-shell particles was observed. The results are shown in Table 1.

Further, by the same operation as in Example 1, the shell thickness was measured, and it was found to be 2 nm i.e. the same as the desired shell thickness. The results are shown in Table 1.

Further, by the same operation as in Example 1, a dispersion and coating composition of hollow particles were obtained to form a coating film. The minimum reflectance of the coating film was measured. The results are shown in Table 1.

EXAMPLE 5

To a 200 mL pressure-resistant container made of quartz, 50 g of an aqueous dispersion (average agglomerated particle size: 20 nm, solid content concentration: 1.0 mass%) of titanium oxide particles (dielectric constant: 30), 1 g of TEOS (solid content concentration as calculated as silicon oxide: 28.8 mass%) (target shell thickness: 3 nm), 48.1 g of ethanol and 0.9 g of 28 mass% aqueous ammonia were added to prepare a raw material liquid having pH of 10.

The pressure-resistant container was tightly sealed, and then the raw material liquid was irradiated with a microwave (MW) having a maximum output power of 1,000 W and frequency of 2.45 GHz for 5 minutes by using a microwave heating apparatus to hydrolyze TEOS and deposit silicon oxide on the surface of titan oxide ($TiO_2$) particles to form a shell, whereby 100 g of a dispersion of core-shell particles was obtained. The temperature of the reaction mixture during microwave irradiation was 120°C. The state of the dispersion of core-shell particles was observed. The results are shown in Table 1.

Further, by the same operation as in Example 1, the shell thickness was measured, and it was found to be 3 nm i.e. the same as the desired shell thickness. The results are shown in Table 1.

EXAMPLE 6

To a 200 mL pressure-resistant container made of quartz, 62.5 g of an aqueous dispersion (average agglomerated particle size: 60 nm, solid content concentration: 8 mass%) of ITO (dielectric constant: 24) particles, 10.4 g of TEOS (solid content concentration as calculated as silicon oxide: 28.8 mass%) (target shell thickness: 15 nm), 26.2 g of ethanol and 0.9 g of 28 mass% aqueous ammonia were added to prepare a raw material liquid having pH of 10.

The pressure-resistant container was tightly sealed, and then the raw material liquid was irradiated with a microwave (MW) having a maximum output power of 1,000 W and frequency of 2.45 GHz for 5 minutes by using a microwave heating apparatus to hydrolyze TEOS and deposit silicon oxide on the surface of ITO particles to form a shell, whereby 100 g of a dispersion of core-shell particles was obtained. The temperature of the reaction mixture during microwave irradiation was 120°C. The state of the dispersion of core-shell particles was observed. The results are shown in Table 1.

Further, by the same operation as in Example 1, the shell thickness was measured, and it was found to be 15 nm i.e. the same as the desired shell thickness. The results are shown in Table 1.

EXAMPLE 7

To a 20 L plastic container, 5,560 g of an aqueous dispersion (average agglomerated particle size: 30 nm, solid content concentration: 20 mass%) of zinc oxide (ZnO, dielectric constant: 18) particles, 690 g of TEOS (solid content concentration as calculated as silicon oxide: 28.8 mass%) (target shell thickness: 2 nm), 3,690 g of ethanol and 60 g of 28 mass% aqueous ammonia were added to prepare a raw material liquid having pH of 10.

The raw material liquid was introduced at a rate of 167 mL/minute to a flow microwave heating apparatus by pumping, and then irradiated with a multimode microwave having a maximum output power of 5 kW and frequency of 2.45 GHz to hydrolyze TEOS and deposit silicon oxide to the surface of zinc oxide particles to form a shell, whereby 10 kg of a dispersion of core-shell particles was obtained. The temperature of the reaction mixture was reached to 120°C in 3 minutes by microwave irradiation. The state of the dispersion of core-shell particles was observed. The results are shown in Table 1.

A portion of the dispersion of core-shell particles was sampled, and then the shell thickness was measured by a transmission electron microscope and was found to be 2 nm i. e. the same as the desired shell thickness. The results are shown in Table 1.

100 g of a strongly acidic cation exchange resin (total exchange capacity: at least 2.0 meq/mL) was added to

EP 2 298 694 A1

100 g of the dispersion of the core-shell particles, followed by stirring for 1 hour, and after the pH became 4, the strongly acidic cation exchange resin was removed by filtration to obtain a dispersion of hollow particles. The dispersion was concentrated by ultrafiltration to a solid content concentration of 20 mass%.

To a 200 mL glass container, 6 g of the dispersion (solid content concentration: 20 mass%) of the hollow particles, 6 g of a silicic acid oligomer solution (solid content concentration: 5 mass%) and 88 g of ethanol were added, followed by stirring for 10 minutes to obtain a coating composition (solid content concentration: 1.5 mass%).

The coating composition was applied to the surface of a glass substrate (100 mm x 100 mm, thickness 3.5 mm) wiped with ethanol and spin-coated at a rotational speed of 200 rpm for 60 seconds for uniformalization, baked at 650°C for 10 minutes, and then rapidly cooled (glass tempering condition) to form a coating film having a thickness of 100 nm. The minimum reflectance of the coating film was measured. The results are shown in Table 1.

When the flow microwave heating apparatus was used in the same manner, hollow particles having the same properties as particles prepared by a small batch apparatus were obtained.

EXAMPLE 8

To a 200 mL pressure-resistant container made of quartz, 50 g of an aqueous dispersion (average agglomerated particle size: 10 nm, solid content concentration: 1.0 mass%) of manganese-doped zinc sulfide (ZnS:Mn, dielectric constant: 13) particles, 4 g of TEOS (solid content concentration as calculated as silicon oxide: 28.8 mass%) (target shell thickness: 3 nm), 42.4 g of ethanol and 3.6 g of 28 mass% aqueous ammonia were added to prepare a raw material liquid having pH of 10.

The pressure-resistant container was tightly sealed, and then the raw material liquid was irradiated with a microwave (MW) having a maximum output power of 1,000 W and frequency of 2.45 GHz for 5 minutes by using a microwave heating apparatus to hydrolyze TEOS and deposit silicon oxide on the surface of manganese-doped zinc sulfide (ZnS:Mn) particles to form a shell, whereby 100 g of a dispersion of core-shell particles was obtained. The temperature of the reaction mixture during microwave irradiation was 120°C. The state of the dispersion of core-shell particles was observed. The results are shown in Table 2.

Further, by the same operation as in Example 1, the shell thickness was measured, and it was found to be 3 nm i.e. the same as the desired shell thickness. The results are shown in Table 2.

EXAMPLE 9

To a 200 mL pressure-resistant container made of quartz, 25.0 g of an aqueous dispersion of zinc oxide particles (average agglomerated particle size: 30 nm, solid content concentration: 20 mass%), 10.4 g of TEOS (solid content concentration as calculated as silicon oxide: 28.8 mass%) (target shell thickness: 5.5 nm), 63.7 g of ethanol and 0.9 g of 28 mass% aqueous ammonia were added to prepare a raw material liquid having pH of 10.

The pressure-resistant container was tightly sealed, and then the raw material liquid was heated at 120°C for 5 minutes by using oil bath (OB). However, the solid content was precipitated without being dispersed in the dispersion medium, whereby the dispersion of core-shell particles was not obtained. The results are shown in Table 2.

EXAMPLE 10

The operation was conducted in the same manner as in Example 7 except that heating by oil bath was conducted at 180°C for 2 minutes. However, the solid content was precipitated without being dispersed in the dispersion medium, whereby the dispersion of core-shell particles was not obtained. The results are shown in Table 2.

EXAMPLE 11

100 g of a dispersion of core-shell particles was obtained by the same operation as in Example 7 except that heating by oil bath was conducted at 60°C for 60 minutes. The state of the dispersion of core-shell particles was observed. The results are shown in Table 2. Besides core-shell particles, silicon oxide particles were deposited in a large amount.

Further, by the same operation as in Example 1, the shell thickness was measured, and it was found to be 1 nm i.e. remarkably smaller than the desired shell thickness. The results are shown in Table 2.

Further, by the same operation as in Example 1, a dispersion and coating composition of hollow particles were obtained to form a coating film. The minimum reflectance of the coating film was measured. The results are shown in Table 2. The antireflection effect of the coating film was found to be low.

12

EXAMPLE 12

The raw material liquid was prepared in the same manner as in Example 5.

The pressure-resistant container was tightly sealed, and then the raw material liquid was heated at 120°C for 5 minutes by using oil bath. However, the solid content was precipitated without being dispersed in the dispersion medium, whereby the dispersion of core-shell particles was not obtained. The results are shown in Table 2.

EXAMPLE 13

The raw material liquid was prepared in the same manner as in Example 6.

The pressure-resistant container was tightly sealed, and then the raw material liquid was heated at 120°C for 5 minutes by using oil bath. However, the solid content was precipitated without being dispersed in the dispersion medium, whereby the dispersion of core-shell particles was not obtained. The results are shown in Table 2.

EXAMPLE 14

100 g of a dispersion of core-shell particles was obtained by the same operation as in Example 8 except that stirring was conducted at 20°C for 6 hours.

The dispersion state of core-shell particles was observed. The results are shown in Table 1. Although the dispersion state was good, formation of a gel required a long period of time. Further, the shell thickness was measured by the same operation as in Example 1, and it was found to be 5.5 nm i.e. the same as the desired shell thickness. The results are shown in Table 2.

Further, by the same operation as in Example 1, a dispersion and coating composition of hollow particles were obtained to form a coating film. The minimum reflectance of the coating film was measured. The results are shown in Table 2.

TABLE 1

| | | Ex. 1 | Ex. 2 | Ex. 3 | Ex. 4 | Ex. 5 | Ex. 6 | Ex. 7 |
|---|---|---|---|---|---|---|---|---|
| Core particles | Material | ZnO | ZnO | ZnO | ZnO | $TiO_2$ | ITO | ZnO |
| | Average agglomerated particle size (nm) | 30 | 30 | 30 | 70 | 20 | 60 | 30 |
| | Dielectric constant | 18 | 18 | 18 | 18 | 30 | 24 | 18 |
| Shell formation condition | Material | TEOS | TEOS | TEOS | TEOS | TEOS | TEOS | TEOS |
| | Heat source | MW | MW | MW | MW | MW | MW | MW |
| | Raw material liquid temperature (°C) | 120 | 180 | 60 | 280 | 120 | 120 | 120 |
| | Time (min) | 5 | 2 | 60 | 15 | 5 | 5 | 5 |
| | Frequency (GHz) | 2.45 | 2.45 | 2.45 | 2.45 | 2.45 | 2.45 | 2.45 |
| | Maximum output power (W) | 500 | 1000 | 100 | 1400 | 1000 | 1000 | 5000 |
| Evaluation | State of liquid | Dispersion | Dispersion | Dispersion | Dispersion | Dispersion | Dispersion | Dispersion |
| | Average agglomerated particle size of core-shell or hollow particles (nm) | 60 | 60 | 60 | 100 | 50 | 80 | 70 |
| | Shell thickness (nm) | 2 | 1 | 2 | 2 | 3 | 15 | 2 |
| | Minimum reflectance (%) | 0.28 | 0.10 | 0.95 | 0.30 | - | - | 0.25 |

TABLE 2

| | | Ex. 8 | Ex. 9 | Ex. 10 | Ex. 11 | Ex. 12 | Ex. 13 | Ex. 14 |
|---|---|---|---|---|---|---|---|---|
| Core particles | Material | ZnS:Mn | ZnO | ZnO | ZnO | $TiO_2$ | ITO | ZnO |
| | Average agglomerated particle size (nm) | 10 | 30 | 30 | 30 | 20 | 60 | 30 |
| | Dielectric constant | 13 | 18 | 18 | 18 | 30 | 24 | 18 |
| Shell formation condition | Material | TEOS | TEOS | TEOS | TEOS | TEOS | TEOS | TEOS |
| | Heat source | MW | OB | OB | OB | OB | OB | - |
| | Raw material liquid temperature (°C) | 120 | 120 | 180 | 60 | 120 | 120 | 20 |
| | Time (min) | 5 | 5 | 2 | 60 | 5 | 5 | 360 |
| | Frequency (GHz) | 2.45 | - | - | - | - | - | - |
| | Maximum output power (W) | 1000 | - | - | - | - | - | - |
| Evaluation | State of liquid | Dispersion | Precipitation | Precipitation | Deposition | Precipitation | Precipitation | Dispersion |
| | Average agglomerated particle size of core-shell or hollow particles (nm) | 20 | - | - | 50 | - | - | 70 |
| | Shell thickness (nm) | 3 | - | - | 1 | - | - | 5.5 |
| | Minimum reflectance (%) | - | - | - | 2.2 | - | - | 0.8 |

By microwave heating, core-shell particles having no precipitation and independent deposition of a shell composition was obtained in a short period of time. The reason for this was considered that core particles were selectively heated by microwave irradiation, whereby the shell formation reaction proceeded only at the surface of core particles. By application of microwave heating, it becomes possible to control the shell thickness to a predetermined level. Therefore, it is useful in view of obtaining core-shell particles having a thick shell and a high core particle protection effect, and hollow particles having a thin shell thickness and a low refractive index.

INDUSTRIAL APPLICABILITY

The core-shell particles obtained by the production method of the present invention are useful as resin fillers, cosmetics, coatings for glass, etc.

The hollow particles obtained by the production method of the present invention are useful as a material for antireflection coatings, etc.

The article having the coating film comprising the coating composition of the present invention formed thereon is useful as e.g. a transparent component for vehicles (such as a headlight cover, a side mirror, a front transparent substrate, a side transparent substrate or a rear transparent substrate), a transparent component for vehicles (such as an instrument panel surface), a meter, a building window, a show window, a display (such as a notebook computer, a monitor, LCD, PDP, ELD, CRT or PDA), a LCD color filter, a substrate for a touch panel, a pickup lens, an optical lens, a lens for glasses, a camera component, a video component, a cover substrate for CCD, an optical fiber edge face, a projector component, a copying machine component, a transparent substrate for solar cells, a screen for a cell-phone, a backlight unit component (such as a light guide plate or a cold-cathode tube), a backlight unit component liquid crystal brightness-improving film (such as a prism or a semi-transmissive film), a liquid crystal brightness-improving film, an organic EL light emitting device component, an inorganic EL light emitting device component, a phosphor light emitting device component, an optical filter, an edge face of an optical component, an illuminating lamp, a cover for a light filament, an amplified laser light source, an antireflection film, a polarizing film, an agricultural film, etc.

The entire disclosure of Japanese Patent Application No. 2008-145490 filed on June 3, 2008 including specification, claims and summary is incorporated herein by reference in its entirety.

**Claims**

1. A method for producing core-shell particles, which comprises irradiating a liquid containing core particles made of a material having a dielectric constant of at least 10 and a metal oxide precursor with a microwave to form a shell made of a metal oxide on the surface of the core particles.

2. The method for producing core-shell particles according to Claim 1, wherein the core particles are zinc oxide particles, titanium oxide particles, or particles of tin oxide doped with indium.

3. The method for producing core-shell particles according to Claim 1 or 2, wherein the metal oxide precursor is an alkoxysilane.

4. The method for producing core-shell particles according to any one of Claims 1 to 3, wherein the output power of the microwave is an output power by which the liquid containing core particles made of a material having a dielectric constant of at least 10 and a metal oxide precursor, is heated to a level of from 30 to 500°C.

5. The method for producing core-shell particles according to any one of Claims 1 to 4, wherein the core particles have an average agglomerated particle size of from 1 to 1,000 nm.

6. The method for producing core-shell particles according to any one of Claims 1 to 5, wherein the shell of the core-shell particles has a thickness of from 1 to 500 nm.

7. The method for producing core-shell particles according to any one of Claims 1 to 6, wherein the core-shell particles have an average agglomerated particle size of from 3 to 1,000 nm.

8. Core-shell particles prepared by the production method as defined in any one of Claims 1 to 7.

9. A method for producing hollow particles, which comprises dissolving or decomposing the core particles of the core-shell particles prepared by the production method as defined in Claim 1.

10. The method for producing hollow particles according to Claim 9, wherein the core particles are zinc oxide particles.

11. The method for producing hollow particles according to Claim 9 or 10, wherein the metal oxide precursor is an alkoxysilane.

12. A coating composition comprising the hollow particles prepared by the production method as defined in any one of Claims 9 to 11, and a dispersion medium.

13. An article comprising a substrate and a coating film made of the coating composition as defined in Claim 12 formed on the substrate.

14. The article according to Claim 13, wherein the coating film has a refractive index of from 0.0 to 1.4 %.

| INTERNATIONAL SEARCH REPORT | International application No. |
|---|---|
| | PCT/JP2009/060193 |

A. CLASSIFICATION OF SUBJECT MATTER
*C01B13/14*(2006.01)i, *C01B33/18*(2006.01)i, *C01G9/08*(2006.01)i, *C01G19/00*
(2006.01)i, *C01G23/047*(2006.01)i, *C09D7/12*(2006.01)i, *C09D201/00*
(2006.01)i
According to International Patent Classification (IPC) or to both national classification and IPC

B. FIELDS SEARCHED

Minimum documentation searched (classification system followed by classification symbols)
C01B13/14, C01B33/18, C01G9/08, C01G19/00, C01G23/047, C09D7/12,
C09D201/00

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)
JSTPlus(JDreamII), JST7580(JDreamII)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-335605 A  (Asahi Glass Co., Ltd.),<br>14 December, 2006 (14.12.06),<br>Claims 1 to 2, 10; Par. Nos. [0032], [0039],<br>[0058] to [0059], [0077]; examples<br>& US 2008/0241474 A1    & EP 1886972 A1<br>& WO 2006/129408 A1 | 8,12-14<br>1-7,9-11 |
| X<br>Y | JP 2006-335881 A  (Asahi Glass Co., Ltd.),<br>14 December, 2006 (14.12.06),<br>Claims 1, 9 to 10; Par. Nos. [0024] to [0025],<br>[0027], [0031], [0033] to [0036], [0044],<br>[0052], [0054]; examples<br>& US 2008/0124539 A1    & EP 1887059 A1<br>& WO 2006/129411 A1 | 8,12-14<br>1-7,9-11 |

[X] Further documents are listed in the continuation of Box C.     [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>19 June, 2009 (19.06.09) | Date of mailing of the international search report<br>30 June, 2009 (30.06.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/060193

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-267705 A (Nippon Shokubai Co., Ltd.), 25 September, 2003 (25.09.03), Claim 1; Par. Nos. [0022] to [0023], [0042] to [0044], [0081] to [0087] & US 2003/0223743 A1 | 1-7,9-11 |
| P,X | JP 2008-139581 A (Asahi Glass Co., Ltd.), 19 June, 2008 (19.06.08), Claim 1; Par. Nos. [0027], [0039]; examples (Family: none) | 8,12-14 |
| P,X | JP 2009-079106 A (Sanyo Chemical Industries, Ltd.), 16 April, 2009 (16.04.09), Claims 1 to 2; Par. Nos. [0008] to [0017]; example 1 (Family: none) | 1-8 |
| P,X | JP 2009-091203 A (Sanyo Chemical Industries, Ltd.), 30 April, 2009 (30.04.09), Claim 1; Par. Nos. [0006], [0015], [0017] to [0025]; example 1 (Family: none) | 1-2,4-8 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006335605 A

- JP 2008145490 A